# EUROPEAN PATENT APPLICATION

(11) **EP 4 852 067 A1**
(43) Date of publication of application: **09.12.2026**
(21) Application number: 26174786.9
(22) Date of filing: 27.04.2026
(51) Int. Cl.: H01M 4/04, H01M 4/70, H01M 4/139

(54) **ELECTRODE AND BATTERY**

(30) Priority: 06.06.2025 JP 2025094792
(71) Applicant: Toyota Jidosha Kabushiki Kaisha, Toyota-shi, Aichi-ken 471-8571 (JP)
(72) Inventor: IKEDA, Takenori, Toyota-shi, 471-8571 (JP); UEDA, Masashi, Toyota-shi, 471-8571 (JP); MIKI, Nariaki, Toyota-shi, 471-8571 (JP); KIDA, Tomohisa, Toyota-shi, 471-8571 (JP); KINTSU, Yusuke, Toyota-shi, 471-8571 (JP); KAZAMA, Daichi, Toyota-shi, 471-8571 (JP); HE, Yu, Toyota-shi, 471-8571 (JP); SATO, Tomohiro, Toyota-shi, 471-8571 (JP)
(74) Representative: Kuhnen & Wacker Patent- und Rechtsanwaltsbüro PartG mbB

(57) **Abstract**

An electrode comprises a current collector (20) and a plurality of electrode films (10). Each of the electrode films (10) includes an electrode active material and a fibrous binder. Each of the electrode films (10) has a width direction and a length direction when viewed in a plane. The current collector (20) has a first main face (21) and a second main face (22). The second main face (22) is located opposite to the first main face (21). On at least one of the first main face (21) and the second main face (22), the electrode films (10) are placed side by side in the width direction. A clearance between side faces (13) of the electrode films (10) adjacent in the width direction is more than 0 mm and not more than 1 mm.

## Description

### CROSS REFERENCE TO RELATED APPLICATIONS

This nonprovisional application is based on Japanese Patent Application No. 2025-094792 filed on June 6, 2025, with the Japan Patent Office, the entire contents of which are hereby incorporated by reference.

### BACKGROUND

### Field

The present disclosure relates to an electrode and a battery.

### Description of the Background Art

Japanese Patent Laying-Open No. 2008-153195 discloses a method of producing a negative electrode for a non-aqueous electrolyte secondary battery, wherein the method comprises a step to add lithium by a dry film formation method.

### SUMMARY

There is a method suggested for producing an electrode by a dry process. For example, roll shaping may be employed to produce an electrode. More specifically, an electrode composite material containing an electrode active material and a fibrous binder is passed through a gap between rolls to form an electrode film. The resulting electrode film is affixed to a current collector to produce an electrode.

At the gap between the rolls, the electrode composite material is stretched in both the length direction and the width direction. The length direction is a machine direction (MD direction), and the width direction is a transverse direction (TD direction). In the above-mentioned process, the greater the width of the electrode film is, the greater the variations in the thickness of the electrode film in the width direction may become. This may occur probably because it is difficult to precisely control, in the width direction, the gap between the rolls and the amount of the supplied electrode composite material (powder). Due to the wide variations in the thickness in the width direction, impregnation of the electrode film with electrolyte solution can become nonuniform.

An object of the present disclosure is to improve impregnation of electrolyte solution.
1. An electrode according to one aspect of the present disclosure comprises a current collector and a plurality of electrode films. Each of the electrode films includes an electrode active material and a fibrous binder. Each of the electrode films has a width direction and a length direction when viewed in a plane. The current collector has a first main face and a second main face. The second main face is located opposite to the first main face. On at least one of the first main face and the second main face, the electrode films are placed side by side in the width direction. A clearance between side faces of the electrode films adjacent in the width direction is more than 0 mm and not more than 1 mm.

The electrode film according to the present disclosure has a thin rectangular shape. Each electrode film may be formed to have a small width. As a result, variations in the thickness of the electrode films in the width direction are expected to be relatively small. Moreover, the clearance between the side faces of the electrode films may serve as a passageway for electrolyte solution during electrolyte solution impregnation. When the clearance is as narrow as 1 mm or less, capillary action is expected to occur to facilitate movement of the electrolyte solution through the clearance. Due to the synergistic effect of these actions, nonuniformity of electrolyte solution impregnation is expected to be reduced.

Conventionally, electrodes are produced by a wet process. In a wet process, a coating material containing an electrode active material, a binder, and liquid (a dispersion medium) is formed. The coating material is applied to a main face of a current collector and then dried, and thereby an electrode film (an electrode active material layer) is formed. While the coating material is drying, the coating material flows outwardly, and as a result, "a liquid-flowed portion" is formed which is a gently-inclined part of a side face of the electrode active material layer. Since a liquid-flowed portion is formed, it would be difficult to control the clearance to be 1 mm or less even by selectively applying the coating material.

2. The electrode according to "1" above may include the following configuration, for example. Each of the electrode films is a self-standing film.

For example, the self-standing film may be formed as a result that the fibrous binder holds the electrode active material (particles). It would be easy to affix the self-standing film to a desired position. Adjusting the clearance may be easy to accomplish when the self-standing film can be affixed.

3. The electrode according to "1" or "2" above may include the following configuration, for example. An angle formed by the first main face or the second main face and the side face is 60° or more.

The electrode film can be cut into a proper planar shape. By the cutting, a steeply-rising side face (an end face) may be provided to the electrode film. With the side face of the electrode film standing almost vertically, precision of the clearance between side faces is expected to be enhanced, for example. It should be noted that in a wet process where a liquid-flowed portion is formed, it would be difficult to control the angle formed by the side face and the main face of the current collector to be 60° or more.

4. The electrode according to any one of "1 " to "3" above may include the following configuration, for example. A ratio of the clearance to a thickness of the electrode film is 1 or less.

By cutting the electrode films and joining them together, it is possible to form a clearance narrower than the thickness of the electrode film. In a wet process where a liquid-flowed portion is formed, it would be difficult to form a clearance narrower than the thickness of the active material layer.

5. The electrode according to any one of "1" to "4" above may include the following configuration, for example. On at least one of the first main face and the second main face, the electrode films are placed side by side in the width direction, and the number of the electrode films placed side by side in the width direction is three or more.

With the number of the electrode films being three or more, nonuniformity of electrolyte solution impregnation is expected to be reduced.

6. The electrode according to any one of "1" to "5" above may include the following configuration, for example. On at least one of the first main face and the second main face, the electrode films are placed side by side in the length direction as well.

With the electrode films placed side by side not only in the width direction but also in the length direction, a clearance extending in two or more directions may be formed. With the passageway for the electrolyte solution formed in multiple directions, nonuniformity of electrolyte solution impregnation is expected to be reduced.

7. A battery according to one aspect of the present disclosure comprises a power generation element and an electrolyte solution. The power generation element includes the electrode according to any one of "1" to "6" above.

8. The battery according to "7" above may include the following configuration, for example. The battery has a bipolar structure.

In a bipolar structure, a thick electrode film may be required. For example, an electrode film having a thickness of 200 µm or more may be required. The thicker the electrode film is, the more likely the nonuniformity of electrolyte solution impregnation may occur. In a bipolar structure, a passageway for electrolyte solution realized by a clearance between electrode films may be especially effective.

In the following, an embodiment of the present disclosure (which may be simply called "the present embodiment" hereinafter) will be described. It should be noted that the present embodiment does not limit the technical scope of the present disclosure. The present embodiment is illustrative in any respect. The present embodiment is non-restrictive. The technical scope of the present disclosure encompasses any modifications within the meaning and the scope equivalent to the terms of the claims. For example, it is originally planned that any configurations of the present embodiment may be optionally combined.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic perspective view illustrating an electrode according to the present embodiment.
Fig. 2 is a schematic plan view illustrating an electrode according to the present embodiment.
Fig. 3 is a schematic cross-sectional view illustrating an electrode according to the present embodiment.
Fig. 4 is a schematic perspective view illustrating a first battery according to the present embodiment.
Fig. 5 is a schematic view of a cross section cut along the line V-V in Fig. 4.
Fig. 6 is a schematic view illustrating a second battery according to the present embodiment.

### DESCRIPTION OF THE PREFERRED EMBODIMENTS

### Terms and Phrases

Expressions such as "comprise", "include", and "have", and other similar terms are open-ended expressions. In the configuration expressed by an open-ended expression, in addition to an essential component, an additional component may or may not be further included. The expression "consist of" is a closed-end expression. However, even in a configuration that is expressed by a closed-end expression, impurities present under ordinary circumstances as well as an additional element irrelevant to the technique of interest may be included. The expression "consist essentially of" is a semiclosed-end expression. A configuration expressed by a semiclosed-end expression tolerates addition of an element that does not substantially affect the fundamental, novel features of the technique of interest.

Expressions such as "may" and "can" are not intended to mean "must" (obligation) but rather mean "there is a possibility" (tolerance).

Expressions such as "first" and "second" are used solely for differentiating a plurality of elements from each other. Such expressions do not limit the scope of these elements. For example, these expressions are independent of the order and the significance of these elements.

For example, the expression "at least one of A and B" includes "A or B" and "A and B". "At least one of A and B" may also be expressed as "A and/or B".

Any geometric term should not be interpreted solely in its exact meaning. Examples of geometric terms include "parallel", "vertical", "orthogonal", and the like. For example, as long as substantially the same or similar functions are obtained, the relative direction, angle, distance, and the like may vary. Any geometric term herein may include tolerances and/or errors in terms of design, operation, production, and/or the like. The dimensional relationship in each figure may not necessarily coincide with the actual dimensional relationship. For the purpose of assisting understanding for the readers, the dimensional relationship in each figure may have been changed. For example, length, width, thickness, and the like may have been changed. A part of a given configuration may have been omitted.

The expression "when viewed in a plane" refers to when a target object is viewed in a direction parallel to the thickness direction (the Z-axis direction in the drawings). A view in a plane is illustrated in a plan view. The expression "when viewed in a cross section" refers to when a target object is viewed in a direction orthogonal to the thickness direction. A view in a cross section is illustrated in a cross-sectional view.

For example, image analysis of an SEM (Scanning Electron Microscope) image and the like as well as dimension measurement in the image may be carried out with assistance of software, or may be carried out with software, or may be carried out with the use of AI and/or the like based on machine learning models. Examples of the software include "ImageJ" and the like. The magnification for SEM examination and the like may be changed as appropriate to be suitable for the measurement target. The magnification for examination may be from 1000 times to 20000 times, for example.

A numerical range such as "(from) m% to n%" includes both the upper limit and the lower limit, unless otherwise specified. That is, "(from) m% to n%" means a numerical range of "not less than m% and not more than n%". Moreover, "not less than m% and not more than n%" includes "more than m% and less than n%". Each of "not less than" (or "or more") and "not more than" (or "or less") is represented by an inequality symbol with an equality symbol, e.g., "≤, ≥". Each of "more than" and "less than" is represented by an inequality symbol without an equality symbol, e.g., "<, >". Any numerical value selected from a certain numerical range may be used as a new upper limit or a new lower limit. For example, any numerical value from a certain numerical range may be combined with any numerical value described in another location of the present specification or in a table or a drawing to set a new numerical range.

For example, a numerical range (a span) expressed as "a range defined by any one or two endpoints selected from the group consisting of a, b, c, and d" includes "a≤x", "a≤x", "b≤x", "x≤b", "c≤x", "x≤c", "d≤x", "x≤d", "a≤x≤b", "a≤x≤c", "a≤x≤d", "b≤x≤c", "b≤x≤d", and "c≤x≤d". Each of them may or may not include the endpoints. More specifically, the above-mentioned range includes not only "a≤x" but also "a<x", for example. The above-mentioned range includes not only "a≤x≤b" but also "a<x≤b", "a≤x<b", and "a<x<b", for example.

All the numerical values are regarded as being modified by the term "about". The term "about" may mean ±5%, ±3%, ±1%, and/or the like, for example. Each numerical value may be an approximate value that can vary depending on the implementation configuration of the technique of interest. Each numerical value may be expressed in significant figures. Unless otherwise specified, each measured value may be the average value obtained by multiple rounds of measurement. The number of rounds of measurement may be 3 or more, or may be 5 or more, or may be 10 or more. Generally, the greater the number of rounds of measurement is, the more reliable the average value is expected to be. Each measured value may be rounded off based on the number of the significant figures. Each measured value may include an error occurring due to the identification limit of the measurement apparatus, for example.

An apparatus, software, and/or the like used for measurement of various values and the like is merely an example. It is possible to use a product similar to the apparatus and/or the like presented as an example. When a similar product is used, the measurement conditions may be adjusted to be suitable for the apparatus.

A chemical formula and a general formula represent a typical example of a compound. A compound may have a stoichiometric composition, or may have a non-stoichiometric composition. For example, "Al₂O₃" is not limited to a compound where the ratio in amount of substance (the molar ratio) is "Al/O=2/3". "Al₂O₃" represents a compound that includes Al and O in any ratio in amount of substance, unless otherwise specified. For example, the compound may be doped with a trace element. Some of Al and/or O may be replaced by another element.

The chemical composition of a certain compound (for example, an inorganic compound) may be measured by inductively coupled plasma atomic emission spectroscopy (ICP-AES). A sample (for example, a positive electrode active material) in an amount of 0.1 g is dissolved in a mixed acid (10 ml) of hydrochloric acid and sulfuric acid to prepare a sample solution. The sample solution is diluted to a proper concentration with the use of a volumetric flask. After dilution, composition analysis is carried out with an ICP-AES apparatus. For example, a product under the trade name "PS3520 UVDD II (manufactured by Hitachi High-Tech Science)" and/or the like may be used.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like, for example. These substituents may be further substituted. When there are two or more substituents, these substituents may be the same as one another or may be different from each other. A plurality of substituents may be bonded together to form a ring.

"Fibrous" means that the aspect ratio (the ratio of the major-axis diameter to the minor-axis diameter) is 10 or more. A substance having an aspect ratio of less than 10 is regarded as being "particulate". The aspect ratio of a fibrous substance (the ratio of the fiber length to the fiber diameter) may be 100 or more, for example. The minor-axis diameter, the major-axis diameter, the fiber diameter, and the fiber length are measured by a microscope method. The aspect ratio is the arithmetic mean of ten measurement targets. The length of the short side of a minimum bounding rectangular "MBR" of the measurement target is regarded as the minor-axis diameter, and the length of the long side is regarded as the major-axis diameter. The fiber diameter refers to the dimension in the direction orthogonal to the axial direction of the measurement target. The fiber length refers to the total length in the axial direction. "Average fiber diameter" refers to the arithmetic mean of the fiber diameters of randomly selected ten fibers.

### Electrode

"Electrode" collectively refers to a positive electrode, a negative electrode, and a bipolar electrode. The electrode may be used in any type of battery system. The battery may be a lithium-ion battery, a sodium-ion battery, a nickel-metal hydride battery, a nickel-zinc battery, and/or the like, for example. In the present embodiment, application to a lithium-ion battery is described as an example. The battery may include a liquid electrolyte, a gelled electrolyte, a solid electrolyte, and/or the like. In other words, the battery may be a liquid-type battery, a polymer battery, a solid-state battery, an all-solid-state battery, and/or the like. "Solid-state battery" refers to a battery including a solid electrolyte as well as other electrolytes. In an all-solid-state battery, electrolyte solution is not used, but it is expected that the clearance between electrode films can accommodate expansion of the electrode films, for example, to reduce the total expansion of the electrode. The above-mentioned battery may be a wound-type one, or may be a stack-type one, for example. The battery may have a monopolar structure, or may have a bipolar structure, for example. Details of the battery will be described below.

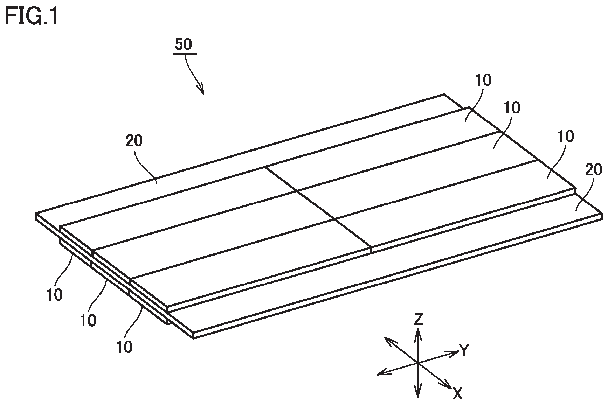

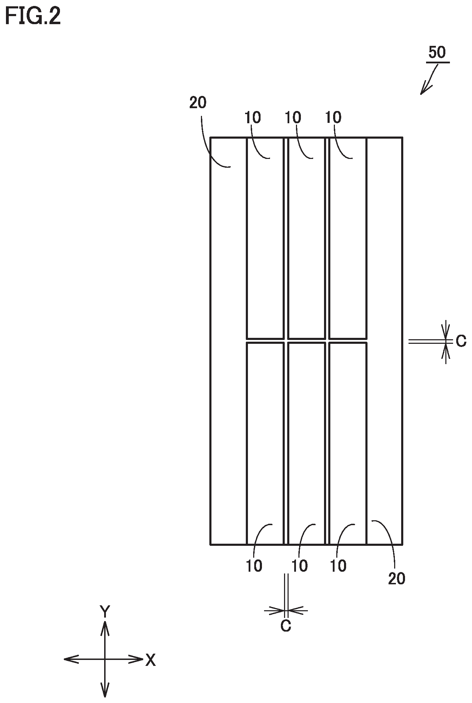

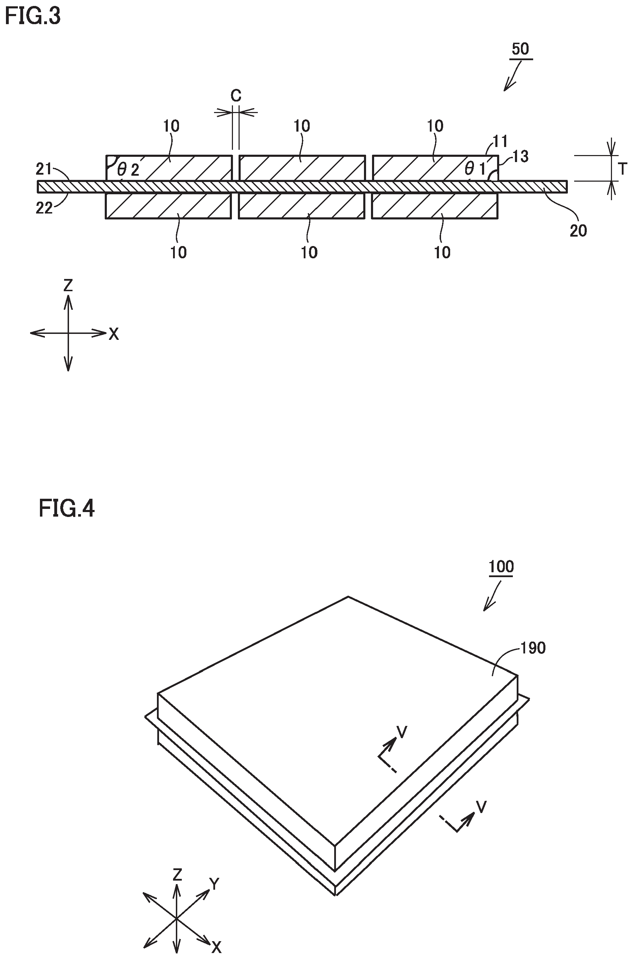

Fig. 1 is a schematic perspective view illustrating an electrode according to the present embodiment. Fig. 2 is a schematic plan view illustrating an electrode according to the present embodiment. Fig. 3 is a schematic cross-sectional view illustrating an electrode according to the present embodiment. An electrode 50 includes a current collector 20 and a plurality of electrode films 10. Current collector 20 includes a first main face 21 and a second main face 22. Second main face 22 is located opposite to first main face 21. On at least one of first main face 21 and second main face 22, electrode film 10 is placed. For example, electrode film 10 may be directly placed on first main face 21. For example, between first main face 21 and electrode film 10, a conductive layer, an adhesive layer, and/or the like may be interposed. Electrode film 10 may be placed on only one side of current collector 20, or may be placed on both sides. When electrode films 10 on the two sides have the same polarity, a monopolar electrode (a positive electrode, a negative electrode) is formed. When electrode films 10 on the two sides have different polarities, a bipolar electrode is formed.

### Current Collector

Current collector 20 is electrically conductive. Current collector 20 may include a metal foil sheet, an electrically-conductive resin film, and/or the like, for example. Current collector 20 may include at least one selected from the group consisting of an Al foil sheet, an Al alloy foil sheet, a Cu foil sheet, a Cu alloy foil sheet, a Ni foil sheet, a Ti foil sheet, and a stainless steel (SUS) foil sheet, for example. When electrode 50 is a bipolar electrode, current collector 20 may be formed by bonding an Al foil sheet and a Cu foil sheet together with an adhesive agent, for example. The thickness of current collector 20 may be in a range defined by any one or two endpoints selected from the group consisting of 5 µm, 10 µm, 15 µm, 20 µm, 25 µm, 30 µm, 35 µm, 40 µm, 45 µm, and 50 µm, for example. The thickness of current collector 20 may be in the range of 5 µm to 50 µm, for example.

### Electrode Film

Electrode film 10 has a width direction (the X-axis direction), a length direction (the Y-axis direction), and a thickness direction (the Z-axis direction). In other words, electrode film 10 has a width direction and a length direction when viewed in a plane. The length direction may be the MD direction at the time of formation of electrode film 10, for example. The length direction may be the TD direction. The dimension of electrode film 10 in the length direction may be greater than, or smaller than, or the same as the dimension of electrode film 10 in the width direction. For example, on first main face 21, electrode films 10 are placed side by side in the width direction. The number of electrode films 10 in the width direction may be in a range defined by any one or two endpoints selected from the group consisting of 2, 3, 4, 5, 6, 7, 8, 9, and 10, for example. The number of electrode films 10 in the width direction may be in the range of 2 to 10, for example. The number of electrode films 10 in the width direction may be 3 or more, for example. Electrode films 10 may be placed side by side in the length direction as well. The number of electrode films 10 in the length direction may be smaller than, or greater than, or the same as the number of electrode films 10 in the width direction. The number of electrode films 10 in the length direction may be in a range defined by any one or two endpoints selected from the group consisting of 1, 2, 3, 4, 5, 6, 7, 8, 9, and 10, for example. The number of electrode films 10 in the length direction may be in the range of 1 to 10, for example.

Between side faces 13 of adjacent electrode films 10, a clearance "C" is provided. The clearance is more than 0 mm and not more than 1 mm. The clearance may be in a range defined by any one or two endpoints selected from the group consisting of 0 mm, 0.01 mm, 0.05 mm, 0.1 mm, 0.2 mm, 0.3 mm, 0.4 mm, 0.5 mm, 0.6 mm, 0.7 mm, 0.8 mm, 0.9 mm, and 1 mm, for example. The clearance may be in the range of 0.01 mm to 0.9 mm, for example. When electrode films 10 are also placed side by side in the length direction, the clearance in the length direction may be the same as or different from the clearance in the width direction. For example, the clearance in the length direction may be greater than the clearance in the width direction. For example, the clearance in the length direction may be smaller than the clearance in the width direction. For example, clearances may be formed in both the length direction and the width direction in a grid pattern.

As long as a clearance is formed between at least some of the electrode films, there may be zero clearance between some other electrode films. For example, the electrode films may be cut and joined to create portions with clearance as well as portions without clearance. With a combination of portions with clearance and portions without clearance thus created, a clearance (a passageway) that has a complex pattern when viewed in a plane may also be formed. For example, a serpentine-shaped passageway, an interdigitated passageway, and/or the like may be formed.

As a reference configuration, an electrode in which all the clearances are zero may be conceivable, for example. Even without a clearance, if the variations in the thickness of the electrode films are made small, for example, there is a possibility that impregnation of electrolyte solution can be improved.

The ratio "C/T" of the clearance "C" to the thickness "T" of electrode film 10 may be in a range defined by any one or two endpoints selected from the group consisting of 0.1, 0.2, 0.3, 0.4, 0.5, 0.6, 0.7, 0.8, 0.9, and 1, for example. The ratio "C/T" may be in the range of 0.1 to 1, for example.

The thickness "T" of electrode film 10 may be in a range defined by any one or two endpoints selected from the group consisting of 5 µm, 10 µm, 25 µm, 50 µm, 75 µm, 100 µm, 150 µm, 200 µm, 250 µm, 300 µm, 400 µm, 500 µm, 600 µm, 700 µm, 800 µm, 900 µm, and 1000 µm, for example. The thickness "T" of electrode film 10 may be in the range of 5 µm to 1000 µm, for example.

The angle "θ1" formed by first main face 21 or second main face 22 and side face 13 of electrode film 10 may be 60° or more, for example. The angle "θ1" may be in a range defined by any one or two endpoints selected from the group consisting of 60°, 75°, 90°, 105°, and 120°, for example. The angle "θ1" may be in the range of 60° to 120°, for example. The angle "θ2" formed by main face 11 and side face 13 of the electrode film may be in a range defined by any one or two endpoints selected from the group consisting of 60°, 75°, 90°, 105°, and 120°, for example. The angle "θ2" may be in the range of 60° to 120°, for example.

Electrode film 10 may be a self-standing film. "Self-standing film" refers to a film that is capable of maintaining its film shape by itself without a support. The self-standing film may be strong enough to withstand roll transportation and the like without a support such as current collector 20, for example. The tensile strength of the self-standing film may be in a range defined by any one or two endpoints selected from the group consisting of 0.1 MPa, 0.2 MPa, 0.3 MPa, 0.5 MPa, 0.6 MPa, 0.7 MPa, 0.8 MPa, 0.9 MPa, and 1.0 MPa, for example. The tensile strength of the self-standing film may be in the range of 0.1 MPa to 1.0 MPa, for example. The tensile strength of the self-standing film may be 0.5 MPa or more, for example. When the self-standing film has a tensile strength of 0.5 MPa or more, web handling and/or the like is expected to be easier to carry out, for example.

The tensile strength of electrode film 10 may be measured in the following manner, for example. From electrode film 10, a specimen is cut out. The planar size of the specimen is about 30 mm×30 mm, for example. On a texture analyzer (manufactured by EKO Instruments, for example), a tensile test of the specimen is carried out at a rate of 2 mm/s. The largest load imposed during the stretching is measured. The tensile strength is determined by the following equation. The value of tensile strength is the arithmetic mean of three specimens. $Rm = \left(F\times 0.0098\right) / \left(t⋅W\right)$
Rm: Tensile strength [MPa]
F: Largest load [g]
t: Thickness of specimen [mm]
W: Width of specimen [mm]

The density of electrode film 10 may be in a range defined by any one or two endpoints selected from the group consisting of 0.5 g/cm³, 1.0 g/cm³, 1.5 g/cm³, 2.0 g/cm³, 2.5 g/cm³, 3.0 g/cm³, 3.5 g/cm³, 4.0 g/cm³, 4.5 g/cm³, and 5.0 g/cm³, for example. The density of electrode film 10 may be in the range of 0.5 g/cm³ to 5.0 g/cm³, for example.

Electrode film 10 includes an electrode active material and a fibrous binder. Electrode film 10 may further include a conductive material, a solid electrolyte, a non-fibrous binder, and/or the like, for example.

### Electrode Active Material

The electrode active material gives rise to electrode reactions. The mass fraction of the electrode active material in electrode film 10 may be in a range defined by any one or two endpoints selected from the group consisting of 70%, 75%, 80%, 85%, 90%, 95%, 97%, 98%, and 99%, for example. The mass fraction of the electrode active material may be in the range of 70% to 99%, for example. It is possible that electrode film 10 contains other components with the remainder being made up of the electrode active material.

The electrode active material is in the form of powder. The particle size distribution of the electrode active material may be monomodal, for example. The particle size distribution may be either a volume-based distribution or a number-based distribution. The volume-based distribution may be measured by laser diffraction. The number-based distribution may be measured by a microscope method. "D50" refers to a particle size in cumulative distribution at which cumulative frequency reaches 50%. The D50 of the electrode active material may be in a range defined by any one or two endpoints selected from the group consisting of 0.1 µm, 0.5 µm, 1 µm, 3 µm, 5 µm, 10 µm, 15 µm, 20 µm, 25 µm, and 30 µm, for example. The D50 of the electrode active material may be in the range of 0.1 µm to 30 µm, for example.

The particle size distribution of the electrode active material may be either bimodal or multimodal, for example. When the particle size distribution (frequency distribution) is bimodal, for example, particles that belong to the peak of larger particle sizes are "large particles". Particles that belong to the peak of smaller particle sizes are "small particles". The modal diameter of each peak may be regarded as the particle size of the corresponding particles. "Modal diameter" refers to the particle size for the peak top in the frequency distribution. The ratio "D_{L}/D_{S}" of the particle size "D_{L}" of the large particles to the particle size "D_{S}" of the small particles may be in a range defined by any one or two endpoints selected from the group consisting of 1.2, 1.5, 2.0, 3.0, 4.0, and 5.0, for example. Relationships such as "1.2≤D_{L}/D_{S}≤5.0" may be satisfied, for example.

The electrode active material may be either in the form of primary particles or in the form of secondary particles. The particle shape of the electrode active material is not particularly limited. The particle shape may be spherical, elliptically spherical, flake-like, plate-like, columnar, lump-like, amorphous, and/or the like, for example.

The electrode active material may be in the form of granules. The method for forming the granules is not particularly limited. For example, the granules may be formed by spray drying, stirring granulation, and/or the like. By granulation, it is possible to adjust the sphericity of the granules (secondary particles). "Sphericity" refers to the circularity in an SEM image (a two-dimensional image). The sphericity (circularity) is determined by the following equation. As the sphericity, the arithmetic mean of ten particles is used. $ψ = 4 πS / {L}^{2}$
ψ: Sphericity (circularity)
π: Circular constant
S: Cross-sectional area of particle (the area of a region surrounded by the contour of the particle)
L: Perimeter of particle (the length of the contour of the particle)

The sphericity "ψ" of the electrode active material may be in a range defined by any one or two endpoints selected from the group consisting of 0.1, 0.2, 0.3, 0.4, 0.5, 0.6, 0.7, 0.8, 0.9, and 1.0, for example. Relationships such as "0.1≤ψ≤1.0" may be satisfied, for example.

The aspect ratio of the electrode active material is not particularly limited. The aspect ratio of the electrode active material may be in a range defined by any one or two endpoints selected from the group consisting of 1, 1.2, 1.5, 1.8, 2, 3, 4, 5, 6, 7, 8, and 9, for example. The aspect ratio of the electrode active material may be in the range of 1 to 9, for example.

The electrode active material may be a negative electrode active material. The negative electrode active material may include, for example, at least one selected from the group consisting of natural graphite (flake graphite, spheroidized graphite), artificial graphite, soft carbon, hard carbon, silicon, silicon oxide, silicon-based alloy, silicon-carbon composite material "Si-C", lithium silicate, tin, tin oxide, tin-based alloy, and lithium titanate. For example, the spheroidized graphite may be covered with amorphous carbon. For example, natural graphite, artificial graphite, soft carbon, and hard carbon may be collectively referred to as "a carbon-based active material". The silicon may include any crystalline phase. The silicon may include at least one selected from the group consisting of a clathrate I type phase, a clathrate II type phase, and a diamond phase, for example. Si-C refers to a composite particle that includes at least one of silicon and silicon oxide as well as carbon. For example, silicon may be supported in the internal space of a carbon particle. The carbon particle may be either a graphite particle or an amorphous carbon particle. For example, silicon, silicon oxide, silicon-based alloy, and silicon-carbon composite material may be collectively referred to as "a Si-based active material".

The negative electrode active material may be a mixture of natural graphite and artificial graphite, for example. The mass ratio "(natural graphite): (artificial graphite)" may be in a range defined by two endpoints that are any two sets selected from the group consisting of "1:9", "2:8", "3:7", "4:6", "5:5", "6:4", "7:3", "8:2", and "9:1", for example. Relationships such as the mass ratio "(natural graphite): (artificial graphite)=1:9 to 9:1" may be satisfied, for example.

The negative electrode active material may be a mixture of a carbon-based active material and a Si-based active material, for example. The mass ratio "(carbon-based active material):(Si-based active material)" may be in a range defined by two endpoints that are any two sets selected from the group consisting of "1:99", "5:95", "10:90", "20:80", "30:70", "40:60", "50:50", "60:40", "70:30", "80:20", "90:10", "95:5", and "99:1", for example. Relationships such as the mass ratio "(carbon-based active material):(Si-based active material)=1:99 to 99:1" may be satisfied, for example.

The electrode active material may be a positive electrode active material. The positive electrode active material may include at least one selected from the group consisting of a lamellar compound, a rock salt-type compound, a spinel-type compound, and an olivine-type compound, for example. The positive electrode active material may be a mixture of a lamellar compound and an olivine-type compound, for example. The mass ratio "(lamellar compound):(olivine-type compound)" may be in a range defined by two endpoints that are any two sets selected from the group consisting of "1:9", "2:8", "3:7", "4:6", "5:5", "6:4", "7:3", "8:2", and "9:1", for example. Relationships such as the mass ratio "(lamellar compound):(olivine-type compound)=1:9 to 9:1" may be satisfied, for example.

The positive electrode active material may include at least one selected from the group consisting of Li[NiCoMn]O₂ (lamellar compound), Li[NiCoAl]O₂ (lamellar compound), LiMnO₂ (rock salt-type compound), Li[NiMn]₂O₄ (spinel-type compound), and Li[MnFe]PO₄ (olivine-type compound), for example. It should be noted that an expression such as [NiCoMn] means that the constituents within the parentheses [ ] are collectively regarded as a single unit in the entire composition ratio. As long as [NiCoMn] is collectively regarded as a single unit, the composition ratio of the individual constituents within the parentheses [ ] is not particularly limited. For example, the amount of one or more constituents in the composition ratio may be zero.

The lamellar compound may have a composition represented by the general formula "LiₓNiₐCo_{b}M_{c}O_{y}", for example. "x" in the formula may be in a range defined by any one or two endpoints selected from the group consisting of 0.1, 0.2, 0.3, 0.4, 0.5, 0.6, 0.7, 0.8, 0.9, 1.0, 1.1, 1.2, 1.3, 1.4, and 1.5, for example. Relationships such as "0.1≤x≤1.5" may be satisfied, for example. In the formula, the relationship "a+b+c=1" is satisfied. As long as this relationship is satisfied, the ranges of "a", "b", and "c" may be independently defined by any one or two endpoints selected from the group consisting of 0, 0.05, 0.1, 0.2, 0.3, 0.4, 0.5, 0.6, 0.7, 0.8, 0.9, and 1.0, for example. Relationships such as "0≤a≤1", "0≤b≤1", and "0≤c≤1" may be satisfied, for example. Relationships such as "0.5≤a≤0.9", "0.05≤b≤0.5", and "0.05≤c≤0.5" may be satisfied, for example. "M" in the formula may be at least one selected from the group consisting of Mn and Al, for example. "y" in the formula may be in a range defined by any one or two endpoints selected from the group consisting of 1.6, 1.7, 1.8, 1.9, 2.0, 2.1, 2.2, 2.3, and 2.4, for example. Relationships such as "1.6≤y≤2.4" may be satisfied, for example.

The lamellar compound may include at least one selected from the group consisting of LiₓNiO_{y}, LiₓCoO_{y}, LiₓMnO_{y}, LiₓNi_{1/3}Co_{1/3}Mn_{1/3}O_{y}, LiₓNi_{0.4}Co_{0.3}Mn_{0.3}O_{y}, LiₓNi_{0.5}Co_{0.2}Mn_{0.3}O_{y}, LiₓNi_{0.5}Co_{0.3}Mn_{0.2}O_{y}, LiₓNi_{0.5}Co_{0.4}Mn_{0.1}O_{y}, LiₓNi_{0.5}Co_{0.1}Mn_{0.4}O_{y}, LiₓNi_{0.6}Co_{0.3}Mn_{0.1}O_{y}, LiₓNi_{0.6}Co_{0.2}Mn_{0.2}O_{y}, LiₓNi_{0.6}Co_{0.1}Mn_{0.3}O_{y}, LiₓNi_{0.7}Co_{0.2}Mn_{0.1}O_{y}, LiₓNi_{0.7}Co_{0.1}Mn_{0.2}O_{y}, LiₓNi_{0.8}Co_{0.1}Mn_{0.1}O_{y}, LiₓNi_{0.8}Co_{0.15}Al_{0.05}O_{y}, and LiₓNi_{0.9}Co_{0.05}Mn_{0.05}O_{y}, for example. In each formula, relationships such as "0.1≤x≤1.5" and "1.6≤y≤2.4" may be satisfied, for example.

The olivine-type compound may have a composition represented by the general formula "LiMPO₄", for example. "M" in the formula may be at least one selected from the group consisting of Fe, Ni, Co, and Mn, for example.

The olivine-type compound may have a composition represented by the general formula "LiₓMn₁₋ₐFeₐPO_{y}", for example. "x" in the formula may be in a range defined by any one or two endpoints selected from the group consisting of 0.1, 0.2, 0.3, 0.4, 0.5, 0.6, 0.7, 0.8, 0.9, 1.0, 1.1, 1.2, 1.3, 1.4, and 1.5, for example. Relationships such as "0.1≤x≤1.5" may be satisfied, for example. "a" in the formula may be in a range defined by any one or two endpoints selected from the group consisting of 0, 0.1, 0.2, 0.3, 0.4, 0.5, 0.6, 0.7, 0.8, 0.9, and 1.0, for example. Relationships such as "0≤a≤1.0" and "0.1≤a≤0.5" may be satisfied, for example. "y" in the formula may be in a range defined by any one or two endpoints selected from the group consisting of 3.6, 3.7, 3.8, 3.9, 4.0, 4.1, 4.2, 4.3, and 4.4, for example. Relationships such as "3.6≤y≤4.4" may be satisfied, for example.

The olivine-type compound may include at least one selected from the group consisting of LiₓMnPO_{y}, LiₓMn_{0.9}Fe_{0.1}PO_{y}, LiₓMn_{0.8}Fe_{0.2}PO_{y}, LiₓMn_{0.7}Fe_{0.3}PO_{y}, LiₓMn_{0.6}Fe_{0.4}PO_{y}, LiₓMn_{0.5}Fe_{0.5}PO_{y},LiₓMn_{0.4}Fe_{0.6}PO_{y}, LiₓMn_{0.3}Fe_{0.7}PO_{y}, LiₓMn_{0.2}Fe_{0.8}PO_{y}, LiₓMn_{0.1}Fe_{0.9}PO_{y}, and LiₓFePO_{y}, for example. In each formula, relationships such as "0.1≤x≤1.5" and "3.6≤y≤4.4" may be satisfied, for example.

The positive electrode active material may be doped with any dopant. The dopant may be either an interstitial one or an substitutional one. The dopant may include at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid, for example. The amount-of-substance fraction of the dopant (the doping amount) may be in a range defined by any one or two endpoints selected from the group consisting of 0.01%, 0.1%, 1%, 3%, and 5%, for example. The doping amount may be in the range of 0.01% to 5%, for example.

### Conductive Material

The conductive material may form an electron conduction path inside the electrode film 10. The conductive material may include at least one selected from the group consisting of acetylene black, Ketjenblack (registered trademark), thermal black, furnace black, carbon fibers, carbon nanotubes, graphene flakes, metal fibers, and metal powder, for example. In the case where the electrode active material is a positive electrode active material, the above-mentioned group of materials that may constitute the conductive material may further include natural graphite, artificial graphite, and the like, for example.

The conductive material may be in the form of powder, for example. The D50 of the conductive material may be smaller than that of the electrode active material. The D50 of the conductive material may be in a range defined by any one or two endpoints selected from the group consisting of 0.01 µm, 0.05 µm, 0.1 µm, 0.5 µm, 1 µm, 3 µm, and 5 µm, for example. The D50 of the conductive material may be in the range of 0.01 µm to 5 µm, for example.

The mass fraction of the conductive material in electrode film 10 may be in a range defined by any one or two endpoints selected from the group consisting of 0%, 0.1%, 0.5%, 1%, 2%, 3%, 4%, 5%, 6%, 7%, 8%, 9%, and 10%, for example. The mass fraction of the conductive material may be in the range of 0% to 10%, for example.

### Solid Electrolyte

The solid electrolyte may form an ion conduction path inside the electrode film 10. The solid electrolyte may include at least one selected from the group consisting of a sulfide solid electrolyte, a halide solid electrolyte, an oxide solid electrolyte, a hydride solid electrolyte, and a nitride solid electrolyte, for example. The sulfide solid electrolyte may include at least one selected from the group consisting of an amorphous phase, a crystalline phase, and a glass ceramic (crystallized glass) phase. The crystalline phase may be of argyrodite type, LGPS type, and/or the like, for example. The sulfide solid electrolyte may include, for example, at least one selected from the group consisting of LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-GeS₂-P₂S₅, Li₂S-P₂S₅, Li₁₀GeP₂S₁₂, Li₄P₂S₆, Li₇P₃S₁₁, Li₃PS₄, and Li₇PS₆. For example, "LiI-LiBr-Li₃PS₄" refers to a sulfide solid electrolyte produced by mixing LiI, LiBr, and Li₃PS₄ in a freely-selected ratio (in amount of substance). For example, the sulfide solid electrolyte may be produced by a mechanochemical method. The mixing ratio may be expressed with the number placed in front of each raw material. For example, "10LiI-15LiBr-75Li₃PS₄" means that the mixing ratio (in amount of substance) is "LiI:LiBr:Li₃PS₄=10:15:75".

The sulfide solid electrolyte may have a composition represented by the general formula "yLiI-zLiBr-(100-y-z)[xLi₂S-(1-x)P₂S₅]", for example. "x" in the formula may be in a range defined by any one or two endpoints selected from the group consisting of 0.1, 0.2, 0.25, 0.3, 0.4, 0.5, 0.6, 0.7, 0.75, 0.8, and 0.9, for example. Relationships such as "0.1≤x≤0.9" may be satisfied, for example. In the formula, the relationship "0<(100-y-z)≤100" is satisfied. As long as this relationship is satisfied, "y" and "z" may be independently in a range defined by any one or two endpoints selected from the group consisting of 0, 5, 10, 15, 20, 25, and 30. For example, relationships such as "0≤y≤30" and "0≤z≤30" may be satisfied.

The sulfide solid electrolyte may have a composition represented by the general formula "Li₄₋ₓM₁₋ₓPₓS₄", for example. "x" in the formula may be in a range defined by any one or two endpoints selected from the group consisting of 0, 0.1, 0.2, 0.3, 0.4, 0.5, 0.6, 0.7, 0.8, 0.9, and 1, for example. Relationships such as "0<x<1" may be satisfied, for example. "M" in the formula may include at least one selected from the group consisting of Al, Zn, In, Ge, Si, Sn, Sb, Ga, and Bi, for example.

The sulfide solid electrolyte may have a composition represented by the general formula "Li₁₀₊ₓGe₁₊ₓP₂₋ₓS₁₂", for example. "x" in the formula may be in a range defined by any one or two endpoints selected from the group consisting of 0, 0.1, 0.2, 0.3, 0.4, 0.5, 0.6, and 0.7, for example. Relationships such as "0<x≤0.7" may be satisfied, for example. A sulfide solid electrolyte represented by this formula may include an LGPS-type crystalline phase, for example.

The halide solid electrolyte may have a composition represented by the general formula "Li₆₋ₙₐMₐX₆", for example. "n" in the formula represents the oxidation number of "M". "M" may include an atom whose oxidation number is +3, for example. "M" in the formula may include an atom whose oxidation number is +4, for example. "M" may include at least one selected from the group consisting of Y, Al, Ti, Zr, Ca, and Mg, for example. Relationships such as "0<a<2" may be satisfied, for example. "X" in the formula may include at least one selected from the group consisting of F, Cl, Br, and I, for example.

The solid electrolyte may be in the form of powder, for example. The D50 of the solid electrolyte may be smaller than that of the electrode active material. The D50 of the solid electrolyte may be in a range defined by any one or two endpoints selected from the group consisting of 0.01 µm, 0.05 µm, 0.1 µm, 0.5 µm, 1 µm, 3 µm, and 5 µm, for example. The D50 of the solid electrolyte may be in the range of 0.01 µm to 5 µm, for example.

The volume fraction of the solid electrolyte in electrode film 10 may be in a range defined by any one or two endpoints selected from the group consisting of 0%, 1%, 5%, 10%, 20%, 30%, 40%, 50%, 60%, and 70%, for example. The volume fraction of the solid electrolyte may be in the range of 0% to 70%, for example.

### Fibrous Binder

The fibrous binder holds the electrode active material and thereby may contribute to maintaining the shape as a film. For example, the fibrous binder may be formed by fiberization (fiber-formation, fibrillation) of a particulate binder (an aggregate) by application of shear force and the like. For example, the application of shear force to a particulate binder may be carried out by passing, through a gap between rolls, an electrode composite material including the particulate binder (which is to be made into a fibrous binder) and the electrode active material. The particulate binder may be made into a fibrous binder, and as a result, electrode film 10 may be formed. The roll machining may be carried out once, or may be repeated multiple times. Prior to the roll machining, a shear force may be applied to the electrode composite material with the use of a jet mill, a stirring granulator, and/or the like, for example. In addition to the application of shear force, heating at 30°C to 150°C may also be carried out to facilitate fibrillation, for example. The particulate binder may be fully fibrillated or partially fibrillated.

The fibrous binder includes a polymer composition, for example. The polymer composition may be a homopolymer, a copolymer, a polymer blend, or a polymer alloy. The fibrous binder may include polytetrafluoroethylene (PTFE) and/or the like, for example. The fibrous binder may also include a freely-selected additional component in addition to PTFE. The additional component may include at least one selected from the group consisting of polyolefin, cellulose, polyether, and polysiloxane, for example. The additional component and PTFE may form at least one selected from the group consisting of a polymer blend, a polymer alloy, and a copolymer. The mass fraction of PTFE or the mass fraction of a tetrafluoroethylene (TFE)-derived component in the fibrous binder may be in a range defined by any one or two endpoints selected from the group consisting of 0%, 10%, 20%, 30%, 40%, 50%, 60%, 70%, 80%, 90%, 95%, 99%, and 100%, for example. The mass fraction of PTFE in the fibrous binder may be in the range of 0% to 100%, for example.

The number average molecular weight "Mn" of the polymer constituting the fibrous binder may be in a range defined by any one or two endpoints selected from the group consisting of 10×10⁴, 50×10⁴, 100×10⁴, 150×10⁴, 200×10⁴, 300×10⁴, 400×10⁴, 500×10⁴, 1000×10⁴, 2000×10⁴, and 3000×10⁴, for example. The number average molecular weight may be in the range of 10×10⁴ to 3000×10⁴, for example. The number average molecular weight may be determined from the standard specific gravity, for example. The sample for the measurement is prepared in conformity with "ASTM D-4895 98". The standard specific gravity is measured by a water displacement method in conformity with "ASTM D-792".

The fiber diameter (the fibril diameter) of the fibrous binder may be in a range defined by any one or two endpoints selected from the group consisting of 1 nm, 5 nm, 10 nm, 15 nm, 20 nm, 50 nm, 100 nm, 200 nm, 500 nm, and 1000 nm, for example. The fiber diameter may be in the range of 1 nm to 1000 nm, for example.

The fibrous binder may form a fiber matrix. For example, the film shape may be maintained by the fiber matrix holding the electrode active material (powder). The fiber matrix may be evaluated in terms of fiber density, for example. The fiber density may be measured by the method described below, for example. A cross-sectional SEM image of electrode film 10 is prepared. At a freely-selected position in the cross-sectional SEM image, a straight line of 20 µm in length is drawn. Fibrous things that cross the straight line are counted, and thereby the fiber density [unit, pieces/20 µm] is determined. The fiber density is measured at three or more positions in the cross-sectional SEM image. The arithmetic mean of these three or more positions is used. The fiber density may be in a range defined by any one or two endpoints selected from the group consisting of 1, 2, 5, 10, 20, 40, 60, 80, and 100, for example. The fiber density may be in the range of 1 to 100, for example.

The mass fraction of the fibrous binder in electrode film 10 may be in a range defined by any one or two endpoints selected from the group consisting of 0.1%, 0.5%, 1%, 2%, 3%, 4%, 5%, 6%, 7%, 8%, 9%, and 10%, for example. The mass fraction of the fibrous binder in electrode film 10 may be in the range of 0.1% to 10%, for example.

### Non-Fibrous Binder

For example, the non-fibrous binder may be in particulate form, in film form, amorphous, and/or the like. For example, the adhesive force of the non-fibrous binder may be more than that of the fibrous binder. For example, the non-fibrous binder may serve to make electrode film 10 adhere to current collector 20. For example, the non-fibrous binder may include at least one selected from the group consisting of polyvinylidene difluoride (PVdF), vinylidene difluoride-hexafluoropropylene copolymer (PVdF-HFP), carboxymethylcellulose (CMC), polyacrylic acid (PAA), polyvinyl alcohol (PVA), polyvinylpyrrolidone (PVP), polyethylene oxide (PEO), styrene-butadiene rubber (SBR), acrylonitrile butadiene rubber (NBR), polyethylene (PE), polypropylene (PP), polyacrylonitrile (PAN), polyoxyethylene alkyl ether, polyimide (PI), polyamide-imide (PAI), and derivatives of these, for example.

The mass fraction of the non-fibrous binder in electrode film 10 may be in a range defined by any one or two endpoints selected from the group consisting of 0%, 0.1%, 0.5%, 1%, 2%, 3%, 4%, 5%, 6%, 7%, 8%, 9%, and 10%, for example. The mass fraction of the non-fibrous binder in electrode film 10 may be in the range of 0% to 10%, for example.

The mass ratio "(fibrous binder):(non-fibrous binder)" may be in a range defined by two endpoints that are any two sets selected from the group consisting of "1:9", "2:8", "3:7", "4:6", "5:5", "6:4", "7:3", "8:2", "9:1", and "10:0", for example. Relationships such as the mass ratio "(fibrous binder):(non-fibrous binder)=1:9 to 10:0" may be satisfied, for example.

### Additional Component

Electrode film 10 may include a freely-selected additional component. The additional component may include an inorganic filler, an organic filler, a surface modifier, a dispersant, a lubricant, a flame retardant, a protective agent, a flux, a coupling agent, an adsorbent, and/or the like, for example. The additional component may include polyoxyethylene allylphenyl ether phosphate, zeolite, silane coupling agent, molybdenum sulfide, tungsten oxide, and/or the like, for example.

### First Battery

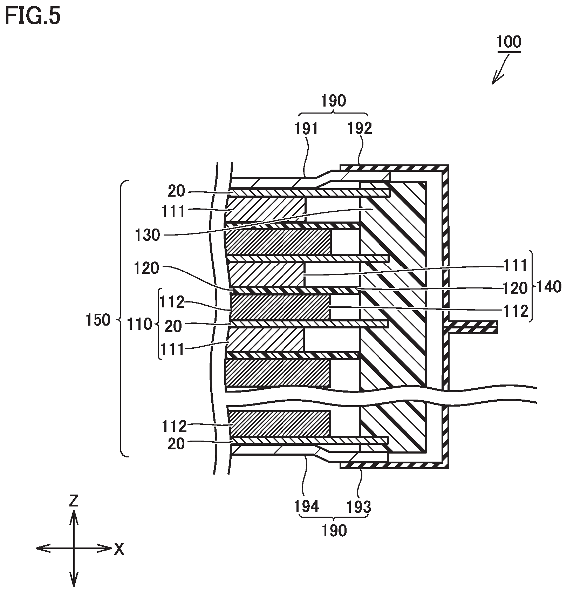

Fig. 4 is a schematic perspective view illustrating a first battery according to the present embodiment. Fig. 5 is a schematic view of a cross section cut along the line V-V in Fig. 4. A first battery 100 is an example of a battery according to the present embodiment. First battery 100 includes a first power generation element 150. First power generation element 150 is a stack-type one. First power generation element 150 has a bipolar structure. It should be noted that the power generation element may also be referred to as "an electrode assembly". Hereinafter, "perpendicular-to-plane direction" refers to the direction of a normal to the surface of a sheet-form member (such as a foil sheet or an electrode, for example). "In-plane direction" refers to any direction that is orthogonal to the perpendicular-to-plane direction. In the drawings related to the present embodiment, the Z-axis direction corresponds to the perpendicular-to-plane direction. Each of the X-axis direction and the Y-axis direction is an example of an in-plane direction.

First battery 100 includes a first exterior package 190. First exterior package 190 accommodates first power generation element 150. First exterior package 190 may include a first current collector plate 191, a first laminated film 192, a second laminated film 193, and a second current collector plate 194, for example. First laminated film 192 and second laminated film 193 are joined to each other at an end in an in-plane direction. At the joint portion between first laminated film 192 and second laminated film 193, a sealing material (not illustrated) may be interposed between first laminated film 192 and second laminated film 193.

At the ends in the stacking direction (the Z-axis direction), first current collector plate 191 and second current collector plate 194 are joined to first power generation element 150, respectively. First laminated film 192 is joined to first current collector plate 191. Second laminated film 193 is joined to second current collector plate 194. At the joint portion between the current collector plate and the laminated film, a sealing material (not illustrated) may be interposed between the current collector plate and the laminated film.

### First Power Generation Element

First power generation element 150 includes a plurality of bipolar electrodes 110 and a plurality of first separators 120. In the perpendicular-to-plane direction (the Z-axis direction), bipolar electrodes 110 and first separators 120 are alternately stacked. In the perpendicular-to-plane direction, each bipolar electrode 110 includes a positive electrode active material layer 111, current collector 20, and a negative electrode active material layer 112 in this order. In an in-plane direction (for example, the X-axis direction), current collector 20 extends outwardly beyond positive electrode active material layer 111 and negative electrode active material layer 112. For example, current collector 20 may extend outwardly beyond positive electrode active material layer 111 and negative electrode active material layer 112 along the entire periphery in an in-plane direction. At least one of positive electrode active material layer 111 and negative electrode active material layer 112 is electrode film 10 described above.

First power generation element 150 includes a sealing material 130. At an end in an in-plane direction, sealing material 130 is attached to current collector 20. For example, sealing material 130 may be heat-sealed to current collector 20. For example, sealing material 130 may be provided along the entire periphery in an in-plane direction. Sealing material 130 may include a resin material and/or the like, for example. Sealing material 130 seals interstices between current collectors 20 that are adjacent to each other in the perpendicular-to-plane direction. The interstices between current collectors 20 are thus sealed with sealing material 130, and thereby cells 140 are formed. A cell 140 is the smallest constituent unit of first power generation element 150. Because it includes a plurality of cells 140, first battery 100 may also be referred to as "a bipolar module" and the like. Each of cells 140 is hermetically sealed. Cells 140 are segregated from each other. Each of cells 140 includes positive electrode active material layer 111, first separator 120, and negative electrode active material layer 112.

### First Separator

First separator 120 is capable of separating positive electrode active material layer 111 from negative electrode active material layer 112. First separator 120 is electrically insulating. First separator 120 may include at least one selected from the group consisting of a resin film, an inorganic particle layer, and an organic particle layer, for example. First separator 120 may include a resin film and an inorganic particle layer, for example.

The resin film is porous. The resin film may include a microporous film, a nonwoven fabric, and/or the like, for example. The resin film includes a resin skeleton. The resin skeleton may be continuous in mesh form, for example. Gaps in the resin skeleton form pores. The resin film allows an electrolyte solution to permeate therethrough. The average pore size of the resin film may be in a range defined by any one or two endpoints selected from the group consisting of 0.01 µm, 0.1 µm, 0.5 µm, and 1 µm, for example. The average pore size of the resin film may be in the range of 0.01 µm to 1 µm, for example. "Average pore size" may be measured by mercury porosimetry. The Gurley value of the resin film may be in a range defined by any one or two endpoints selected from the group consisting of 50 s/100cm³, 100 s/100cm³, 150 s/100cm³, 200 s/100cm³, and 250 s/100cm³, for example. The Gurley value of the resin film may be in the range of 50 s/100cm³ to 250 s/100cm³, for example. "Gurley value" may be measured by a Gurley test method.

The resin film may include at least one selected from the group consisting of an olefin-based resin, a polyurethane-based resin, a polyamide-based resin, a cellulose-based resin, a polyether-based resin, an acrylic-based resin, a polyester-based resin, and the like, for example. The resin film may include at least one selected from the group consisting of PE, PP, polyamide (PA), PAI, PI, aromatic polyamide (aramid), polyphenylene ether (PPE), and derivatives of these, for example. The resin film may be formed by stretching, phase separation, and/or the like, for example. The thickness of the resin film may be in a range defined by any one or two endpoints selected from the group consisting of 5 µm, 10 µm, 15 µm, 20 µm, 25 µm, 30 µm, 40 µm, and 50 µm, for example. The thickness of the resin film may be in the range of 5 µm to 50 µm, for example.

The resin film may have a monolayer structure. The resin film may be made of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer and the PP layer may be independently in a range defined by any one or two endpoints selected from the group consisting of 3 µm, 5 µm, 10 µm, 15 µm, and 20 µm. The thickness of the PE layer and the PP layer may be independently in the range of 3 µm to 20 µm, for example.

The inorganic particle layer may be formed on the surface of the resin film. The inorganic particle layer may be formed on only one side of the resin film, or may be formed on both sides of the resin film. The inorganic particle layer may be formed on the side facing the positive electrode active material layer 111, or may be formed on the side facing the negative electrode active material layer 112. The inorganic particle layer may be formed on the surface of positive electrode active material layer 111, or may be formed on the surface of negative electrode active material layer 112.

The inorganic particle layer is porous. The inorganic particle layer includes inorganic particles. The inorganic particles may also be called "an inorganic filler". Gaps between the inorganic particles form pores. The thickness of the inorganic particle layer may be in a range defined by any one or two endpoints selected from the group consisting of 0.5 µm, 1 µm, 3 µm, 5 µm, and 10 µm, for example. The thickness of the inorganic particle layer may be in the range of 0.5 µm to 10 µm, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The shape of the inorganic particles is not particularly limited. The inorganic particles may be spherical, rod-like, plate-like, fibrous, and/or the like, for example. The D50 of the inorganic particles may be in a range defined by any one or two endpoints selected from the group consisting of 0.1 µm, 0.5 µm, 1 µm, 3 µm, 5 µm, and 10 µm, for example. The D50 of the inorganic particles may be in the range of 0.1 µm to 10 µm, for example. The inorganic particle layer may further include a binder. The binder may include at least one selected from the group consisting of an acrylic-based resin, a polyamide-based resin, a fluorine-based resin, an aromatic-polyether-based resin, and a liquid-crystal-polyester-based resin, and the like, for example.

First separator 120 may include an organic particle layer, for example. First separator 120 may include an organic particle layer instead of the resin film, for example. First separator 120 may include an organic particle layer instead of the inorganic particle layer, for example. First separator 120 may include both the resin film and an organic particle layer. First separator 120 may include both the inorganic particle layer and an organic particle layer. First separator 120 may include the resin film, the inorganic particle layer, and an organic particle layer.

The thickness of the organic particle layer may be in a range defined by any one or two endpoints selected from the group consisting of 0.1 µm, 0.5 µm, 1 µm, 5 µm, 10 µm, 20 µm, and 50 µm, for example. The thickness of the organic particle layer may be in the range of 0.1 µm to 50 µm, for example. The organic particle layer includes organic particles. The organic particles may also be called "an organic filler". The organic particles may include a heat-resistant material. The organic particles may include at least one selected from the group consisting of PE, PP, PTFE, PI, PAI, PA, aramid, and the like, for example. The organic particles may be spherical, rod-like, plate-like, fibrous, and/or the like, for example. The D50 of the organic particles may be in the range of 0.1 to 10 µm, for example.

First separator 120 may include a mixed layer, for example. The mixed layer includes both inorganic particles and organic particles.

First separator 120 may include a solid electrolyte layer, for example. The solid electrolyte layer includes a solid electrolyte and a binder. The solid electrolyte may be selected from the materials mentioned above as components of electrode film 10, for example.

### Electrolyte Solution

First battery 100 may include an electrolyte solution, for example. The electrolyte solution is a liquid electrolyte. The electrolyte solution includes a solute and a solvent. The concentration of the solute may be in a range defined by any one or two endpoints selected from the group consisting of 0.5 mol/L, 1.0 mol/L, 1.5 mol/L, 2.0 mol/L, and 2.5 mol/L, for example. The concentration of the solute may be in the range of 0.5 mol/L to 2.5 mol/L, for example. "Mol/L" may also be expressed as "M". The solute includes a supporting salt (a Li salt). The solute may include an inorganic acid salt, an imide salt, an oxalato complex, a halide, and/or the like, for example. The solute may include at least one selected from the group consisting of LiPF₆, LiBF₄, LiClO₄, LiAsF₆, LiSbF₆, LiN(SO₂F)₂ "LiFSI", LiN(SO₂CF₃)₂ "LiTFSI", LiB(C₂O₄)₂ "LiBOB", LiBF₂(C₂O₄) "LiDFOB", LiPF₂(C₂O₄)₂ "LiDFOP", LiPO₂F₂, FSO₃Li, LiI, LiBr, and derivatives of these, for example. It should be noted that the word enclosed in double quotation marks, such as "LiFSI", represents a common name or an abbreviation of the substance.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these, for example.

The solvent may include a cyclic carbonate (such as EC, PC, FEC) and a chain carbonate (such as EMC, DMC, DEC), for example. The volume ratio "(cyclic carbonate):(chain carbonate)" may be in a range defined by two endpoints that are any two sets selected from the group consisting of "1:9", "2:8", "3:7", "4:6", "5:5", "6:4", "7:3", "8:2", and "9:1", for example. Relationships such as the volume ratio "(cyclic carbonate):(chain carbonate)=1:9 to 9:1" may be satisfied, for example.

The solvent may include a cyclic carbonate (such as EC, PC) and a fluorinated cyclic carbonate (such as FEC), for example. The volume ratio "(cyclic carbonate):(fluorinated cyclic carbonate)" may be in a range defined by two endpoints that are any two sets selected from the group consisting of "99:1", "90:10", "70:30", "50:50", "30:70", "10:90", and "1:99", for example. Relationships such as the volume ratio "(cyclic carbonate):(fluorinated cyclic carbonate)=99:1 to 1:99" may be satisfied, for example.

The solvent may include EC, FEC, EMC, DMC, and DEC, for example. The volume ratio of these components may satisfy the relationship represented by the relational expression "V_{EC}+V_{FEC}+V_{EMC}+V_{DMC}+V_{DEC}=10", for example. In the relational expression, each of "V_{EC}, V_{FEC}, V_{EMC}, V_{DMC}, V_{DEC}" represents the volume ratio of EC, FEC, EMC, DMC, DEC, respectively. The relationships "1≤V_{EC}≤4", "0≤V_{FEC}≤3", "(V_{EC}+V_{FEC} )≤4", "0≤V_{EMC}≤9", "0≤V_{DMC}≤9", "0≤V_{DEC}≤9", and "6≤(V_{EMC}+V_{DMC}+V_{DEC})≤9" are satisfied. For example, the relationship "1≤V_{EC}≤2" or "2≤V_{EC}≤3" may be satisfied. For example, the relationship "1≤V_{FEC}≤2" or "2≤V_{FEC}≤4" may be satisfied. For example, the relationship "3≤V_{EMC}≤4" or "6≤V_{EMC}≤8" may be satisfied. For example, the relationship "3≤V_{DMC}≤4" or "6≤V_{DMC}≤8" may be satisfied. For example, the relationship "3≤V_{DEC}≤4" or "6≤V_{DEC}≤8" may be satisfied.

The composition of the solvent in volume ratio may be "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4", or the like, for example.

The electrolyte solution may include an ether-based solvent, for example. The electrolyte solution may include at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these, for example.

The electrolyte solution may include a freely-selected additive. The amount to be added (the mass fraction to the total amount of the electrolyte solution) may be in a range defined by any one or two endpoints selected from the group consisting of 0.01%, 0.05%, 0.1%, 1%, 3%, and 5%, for example. The amount to be added may be in the range of 0.01% to 5%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these, for example.

The components described above as the solute and the solvent may be used as an additive (a trace component). The additive may include at least one selected from the group consisting of LiBF₄, LiFSI, LiTFSI, LiBOB, LiDFOB, LiDFOP, LiPO₂F₂, FSO₃Li, LiI, LiBr, HFE, DOX, PC, FEC, and derivatives of these, for example.

The electrolyte solution may include an ionic liquid, for example. The ionic liquid may include at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these, for example.

First battery 100 may include a gelled electrolyte, for example. The gelled electrolyte may include an electrolyte solution and a polymer material. The polymer material may form a polymer matrix. The polymer material may include at least one selected from the group consisting of PVdF, PVdF-HFP, polyacrylonitrile (PAN), PVdF-PAN, polyethylene oxide (PEO), polyethylene glycol (PEG), and derivatives of these, for example.

### Second Battery

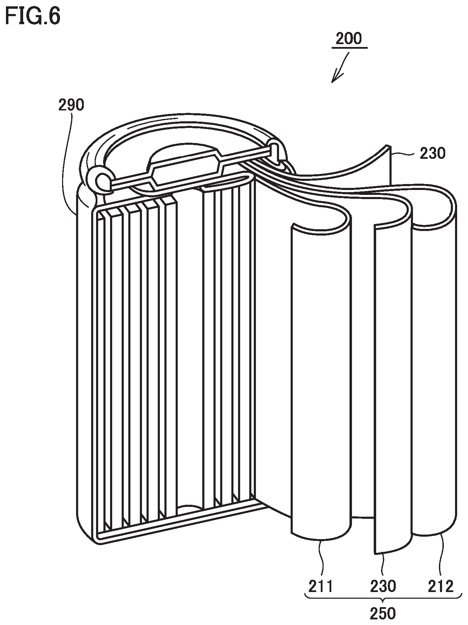

Fig. 6 is a schematic view illustrating a second battery according to the present embodiment. A second battery 200 is an example of a battery according to the present embodiment. Second battery 200 includes a second power generation element 250. Second power generation element 250 is a wound-type one. Second power generation element 250 has a monopolar structure.

Second battery 200 includes a second exterior package 290. Second exterior package 290 accommodates second power generation element 250. The outer shape of second exterior package 290 may be cylindrical or prismatic, for example. Second exterior package 290 may be a case made of metal, for example. Second exterior package 290 may be sealed by swaging, laser processing, and/or the like, for example.

### Second Power Generation Element

Second power generation element 250 includes a stack. The stack includes a positive electrode 211, a second separator 230, and a negative electrode 212 in this order. The number of second separator 230 may be one, or may be two or more. For example, the stack may include positive electrode 211, second separator 230, negative electrode 212, and second separator 230 in this order. Each of positive electrode 211, second separator 230, and negative electrode 212 has a belt-like planar shape. The stack is wound spirally. The stack is wound along the length direction of the electrode. At least one of positive electrode 211 and negative electrode 212 includes electrode film 10. The material mentioned above as the material of first battery 100 may also be used as the material of second battery 200 without limitation.

## Claims

1. An electrode comprising:
a current collector (20); and
a plurality of electrode films (10), wherein
each of the electrode films (10) includes an electrode active material and a fibrous binder,
each of the electrode films (10) has a width direction and a length direction when viewed in a plane,
the current collector (20) has a first main face (21) and a second main face (22),
the second main face (22) is located opposite to the first main face (21),
on at least one of the first main face (21) and the second main face (22), the electrode films (10) are placed side by side in the width direction, and
a clearance between side faces (13) of the electrode films (10) adjacent in the width direction is more than 0 mm and not more than 1 mm.

2. The electrode according to claim 1, wherein each of the electrode films (10) is a self-standing film.

3. The electrode according to claim 1, wherein an angle formed by the first main face (21) or the second main face (22) and the side face (13) is 60° or more.

4. The electrode according to any one of claims 1 to 3, wherein a ratio of the clearance to a thickness of the electrode film (10) is 1 or less.

5. The electrode according to any one of claims 1 to 3, wherein on at least one of the first main face (21) and the second main face (22), the electrode films (10) are placed side by side in the width direction, and the number of the electrode films (10) placed side by side in the width direction is three or more.

6. The electrode according to any one of claims 1 to 3, wherein on at least one of the first main face (21) and the second main face (22), the electrode films (10) are placed side by side in the length direction as well.

7. A battery comprising:
a power generation element (150, 250); and
an electrolyte solution, wherein
the power generation element includes the electrode according to any one of claims 1 to 3.

8. The battery according to claim 7, having a bipolar structure.
